# EUROPÄISCHE PATENTSCHRIFT

(11) **EP 2 101 468 B1**
(45) Veröffentlichungstag und Bekanntmachung des Hinweises auf die Patenterteilung: **05.03.2014**
(21) Anmeldenummer: 08102516.5
(22) Anmeldetag: 12.03.2008
(51) Int. Cl.: H04L 29/06

(54) **Einbeziehung von Signalisierungsinformationen in ein Schlüsselmanagementprotokoll für den sicheren Medientransport**
Utilising signalling information in a key management protocol for secure media transport
Prise en compte d'informations de signalisation dans un protocole de gestion de clé pour le transport de médias sûr

(43) Veröffentlichungstag der Anmeldung: 16.09.2009
(73) Patentinhaber: Deutsche Telekom AG, 53113 Bonn (DE)
(72) Erfinder: Löhlein, Bernhard, 97837, Erlenbach (DE)
(74) Vertreter: Blumbach Zinngrebe

(56) Entgegenhaltungen:
- MCGREW CISCO SYSTEMS E RESCORLA NETWORK RESONANCE D: "Datagram Transport Layer Security (DTLS) Extension to Establish Keys for Secure Real-time Transport Protocol (SRTP); draft-ietf-avt-dtls-srtp-02.txt" IETF STANDARD-WORKING-DRAFT, INTERNET ENGINEERING TASK FORCE, IETF, CH, Bd. avt, Nr. 2, 25. Februar 2008 (2008-02-25), XP015053050 ISSN: 0000-0004
- FISCHL COUNTERPATH CORPORATION H TSCHOFENIG NOKIA SIEMENS NETWORKS E RESCORLA NETWORK RESONANCE J: "Framework for Establishing an SRTP Security Context using DTLS; draft-ietf-sip-dtls-srtp-framework-01.txt" IETF STANDARD-WORKING-DRAFT, INTERNET ENGINEERING TASK FORCE, IETF, CH, Bd. sip, Nr. 1, 23. Februar 2008 (2008-02-23), XP015053889 ISSN: 0000-0004
- JOHAN BILIEN ET AL: "Secure VoIP: call establishment and media protection" INTERNET CITATION, [Online] XP007902427 Gefunden im Internet: URL:http://minisip.org/publications/secvoi p-minisip-camera.pdf> [gefunden am 2007-05-31]
- PRATEEK GUPTA ET AL: "Security Analysis of Voice-over-IP Protocols" COMPUTER SECURITY FOUNDATIONS SYMPOSIUM, 2007. CSF '07. 20TH IEEE, IEEE, PI, 1. Juli 2007 (2007-07-01), Seiten 49-63, XP031115388 ISBN: 978-0-7695-2819-9

## Beschreibung

Die Erfindung betrifft allgemein die digitale Datenübertragung, und insbesondere ein Verfahren und ein System zur sicheren Datenübertragung zwischen Kommunikationsteilnehmern.

Viele Kommunikationsprotokolle sind aufgeteilt in ein Signalisierungsprotokoll und ein Medientransportprotokoll. Das Signalisierungsprotokoll ist dabei in der Regel für den Aufbau einer Verbindung zwischen den Kommunikationspartnern verantwortlich. Mit dem Signalisierungsprotokoll teilt ein Teilnehmer A einem Teilnehmer B mit, dass bestimmte Informationswerte über das Medientransportprotokoll übertragen werden sollen, sowie die Art und Weise, wie diese übertragen werden sollen. Im Folgenden wird davon ausgegangen, dass der Start des Signalisierungsprotokolls durch den Teilnehmer A erfolgt. Sind die für die Durchführung des Medientransportprotokolls notwendigen Parameter im Signalisierungsprotokoll zwischen A und B ausgetauscht bzw. vereinbart worden, so kann die Übermittlung der Informationswerte über das Medientransportprotokoll erfolgen.

Als Beispiel kann die Anwendung Voice over IP (VoIP) auf der Basis des Signalisierungsprotokolls SIP (Session Initiation Protocol) gemäß IETF RFC 3261 und dem Medientransportprotokoll RTP (Real-Time Transport Protocol) gemäß IETF RFC 3550 angeführt werden, wobei über das Medientransportprotokoll die digitalisierten und codierten Sprachinformationen übertragen werden.

Für den Fall, dass der Start des Signalisierungsprotokolls durch Teilnehmer A erfolgt, kann der Start des Medientransportprotokolls von Teilnehmer B zu Teilnehmer A schon erfolgen, bevor die erste Antwort von Teilnehmer B im Signalisierungsprotokoll an Teilnehmer A erfolgt ist, falls Teilnehmer B die notwendigen Signalisierungsdaten bereits erhalten hat. Dies wird im Zusammenhang mit der Anwendung des SIP-basierten VoIP auch als Early-Media bezeichnet.

Das Signalisierungsprotokoll kann auf dem Kommunikationsweg zwischen A und B gegebenenfalls über mehrere Vermittlungsstellen verlaufen, wobei die Vermittlungsstellen Modifikationen an den Nachrichten des Signalisierungsprotokolls durchfuhren können. Die Vermittlungsstellen können dabei von unterschiedlichen Anbietern betrieben und somit unter verschiedenen administrativen Hoheiten stehen.

Bei der beispielhaften Anwendung VoIP wird eine solche Vermittlungsstelle als SIP-Proxy bezeichnet. Die Teilnehmer sind für VoIP typischerweise mit SIP-basierten Telefonen ausgestattet. Ohne gesonderte Maßnahmen werden bei SIP und RTP die Protokollnachrichten unverschlüsselt und ohne Integritätsschutz übertragen.

Das Signalisierungsprotokoll und das Medientransportprotokoll werden in der Regel auf unterschiedlichen Kommunikationswegen und voneinander unabhängig übertragen. Bei beiden Kommunikationswegen ist jedoch im allgemeinen Fall davon auszugehen, dass diese über nicht vertrauenswürdige Kommunikationsnetze und Kommunikationselemente verlaufen. Um Vertraulichkeit und Integrität der übertragenen Nachrichtenelemente zu gewährleisten, ist daher der Einsatz kryptographischer Methoden erforderlich.

Aber auch bei Anwendung von Sicherheitsmechanismen zwischen den beteiligten Protokollelementen, d.h. den Teilnehmern und Vermittlungsstellen, können Modifikationen durch nicht vertrauenswürdige Vermittlungsstellen auf dem Kommunikationsweg zwischen Teilnehmer A und Teilnehmer B erfolgen. Eine kryptographische Sicherung der Signalisierungsinformation zwischen A und B (Ende-zu-Ende) ist in der Regel nicht effizient möglich, da die Vermittlungsstellen die Signalisierungsinformationen modifizieren müssen. Somit ist eine verlässliche und vertrauenswürdige Übertragung im Signalisierungspfad auf einer Ende-zu-Ende Basis nicht unmittelbar möglich.

Ebenso besteht in der Regel die Anforderung, dass das Medientransportprotokoll vertraulich und integritätsgeschützt Ende-zu-Ende, d.h. zwischen Teilnehmer A und B, übertragen wird, da der Kommunikationsweg über nicht vertrauliche Kommunikationsnetze und Kommunikationselemente verläuft. Hierzu müssen kryptographische Primitive, wie zum Beispiel Verschlüsselung und Integritätsprüfungsfunktionen, auf die zu übertragenden Nachrichten des Medientransportprotokolls angewendet werden. Die Schlüssel hierzu werden typischerweise durch ein Schlüsselmanagementprotokoll zwischen den Teilnehmern A und B etabliert. Hierbei kann jedoch der Fall auftreten, dass die elektronischen Identitäten der Teilnehmer innerhalb des Signalisierungsprotokolls und des Schlüsselmanagementprotokolls für den sicheren Medientransport nicht übereinstimmen.

Wird beispielsweise eine PKI (Public Key Infrastructure) für die Verschlüsselung im Medientransportprotokoll eingesetzt, so erfolgt die Verschlüsselung der über das Medientransportprotokoll zu übertragenden Mediendaten durch Teilnehmer A unter Verwendung eines öffentlichen Schlüssels des Teilnehmers B, der auf Basis der dem Teilnehmer A bekannten Identität des Teilnehmers B ausgewählt wurde. Da jedoch auch die Identität des Teilnehmers B in einer Signalisierungsnachricht durch eine Vermittlungsstelle modifiziert werden kann, ohne dass Teilnehmer A diese Information erhält, kann der Fall auftreten, dass die Mediendaten von Teilnehmer A mit einem öffentlichen Schlüssel verschlüsselt werden, der nicht auf der tatsächlichen Identität des Teilnehmers B basiert. Dies würde dazu führen, dass die verschlüsselten Mediendaten von Teilnehmer B nicht entschlüsselt werden können.

Innerhalb der IETF werden für die Anwendung SIP-basiertes VoIP verschiedene Methoden für die integritätsgeschützte Übertragung der Identitäten des Signalisierungsprotokolls erarbeitet.

So wird in IETF RFC 4474 die Möglichkeit beschrieben, in einen SIP Header zusätzliche Felder einzuführen, um eine digitale Signatur zur Validierung der Identität und eine Referenz auf das entsprechende Zertifikat des Unterzeichners zu übertragen. Die Nachteile dieses Ansatzes bestehen darin, dass nur die Identität des Teilnehmers A in Richtung B übertragen wird und somit die tatsächliche Identität von Teilnehmer B nicht an Teilnehmer A übertragen wird, was zu den oben beschriebenen Problemen führt. Zudem macht dieser Ansatz Modifikationen in den als SIP-Proxies ausgebildeten Vermittlungsstellen und im Signalisierungsprotokoll notwendig.

Beispielsweise in "Response Identity in Session Initiation Protocol" von F. Cao (Ed.) (IETF Internet Draft, Januar 2006) wird ferner ein Ansatz beschrieben, der das Übertragen der tatsächlichen Identität von Teilnehmer B innerhalb des Signalisierungsprotokolls an Teilnehmer A vorsieht, wobei zu diesem Zweck ein entsprechendes Feld im SIP-Header einer Antwortnachricht von Teilnehmer B zu Teilnehmer A vorgesehen ist. Nachteilig hierbei ist, dass die Identität von Teilnehmer B zu spät bei Teilnehmer A ankommt, falls der Medientransport schon beginnt, bevor Teilnehmer A die entsprechende Nachricht im Signalisierungsprotokoll erhalten hat. Und auch dieser Ansatz macht nachteiligerweise Modifikationen in den SIP-Proxies und im Signalisierungsprotokoll notwendig.

In "Datagram Transport Layer Security (DTLS) Extension to Establish Keys for Secure Real-time Transport Protocol (SRTP); draft-ietf-avt-dtls-srtp-02.txt", 25. Februar 2008, wird eine Erweiterung des Verschlüsselungoprotokolls DTLS (Datagram Transport Layer Security) beschrieben, die dazu dient, Schlüssel zur Verwendung mit SRTP (Secure Real-time Transport Protocol) und SRTCP (Secure Real-time Transport Control Protocol) bereitzustellen. Zu diesem Zweck wird für jeden RTP- oder RTCP-Datenstrom ein DTLS-Handshake zwischen den identischen Quell- und Ziel-Ports ausgeführt und das Verschlüsselungsmaterial aus dem DTLS-Handshake in den SRTP-Stapel integriert, wobei die Integration des Verschlüsselungsmaterials in den SRTP-Stapel dazu dient, RTP-Nachrichten zu verschlüsseln. Das Dokument "Framework for Establishing an SRTP Security Context using DTLS; draft-ietf-sip-dtls-srtp-framework-01.txt", 23. Februar 2008, knüpft hieran an und beschreibt den Einsatz des Signalisierungsprotokolls SIP zum Aufbauen einer DTLS-SRTP-Sitzung, wobei über SIP ein Fingerabdruck mittels SDP (Session Description Protocol) übertragen wird, durch welchen der Schlüssel für den DTLS-Handshake identifiziert wird. Beide Kommunikationsendpunkte erzeugen vor dem Verbindungsaufbau ein Zertifikat, welches den zur Verschlüsselung der Mediendaten zu verwendenden öffentlichen Schlüssel des jeweiligen Kommunikationspartners beinhaltet und während des DTLS-Handshakes präsentiert wird, wobei der Fingerabdruck des jeweiligen Zertifikates über SIP ausgetauscht wird. Auf diese weise kann der Empfänger einer SIP-INVITE-Nachricht einen DTLS-Handshake ausführen und überprüfen, ob das im DTLS-Handshake erhaltene Zertifikat mit dem über SIP empfangenen Zertifikats-Fingerabdruck konsistent ist.

Aus "Secure VoIP: call establishment and media protection" von Johan Bilien et al. ist ferner der Aufbau eines sicheren VoIP-Anrufes unter Verwendung von SIP bekannt, wobei bei einer SIP-Signalisierung in den Signalisierungsnachrichten Verschlüsselungsnachrichten zur Festlegung von Schlüsseln integriert sind. Die Verschlüsselungsnachrichten, beispielsweise MIKEY-Nachrichten (Multimedia Internet Keying), können in einem neuen SDP-Attribut "key-mgmt" über SIP übertragen werden. Durch die MIKEY-Nachrichten wird ein Master-Schlüssel ausgetauscht, der für das Erzeugen von Sitzungsschlüsseln zur Verwendung in SRTP verwendet wird.

Der Erfindung liegt daher die Aufgabe zugrunde, einen verbesserten Weg aufzuzeigen, um Daten mittels eines Kommunikationsprotokolls zu übertragen, welches ein separates Signalisierungs- und Medientransportprotokoll umfasst. Eine weitere Aufgabe der Erfindung besteht darin, die Sicherheit bei Datenübertragungen unter Verwendung eines in ein Signalisierungsprotakoll und ein Medientransportprotokoll aufgeteilten Kommunikationsprotokolls zu erhöhen. Ferner liegt der Erfindung insbesondere die Aufgabe zugrunde, ein Verfahren zur Datenübertragung vorzuschlagen, welches nicht die oben beschriebenen, im Stand der Technik bestehenden Nachteile aufweist.

Diese Aufgaben werden durch ein Verfahren gemäß Anspruch 1, sowie eine **Kommunikations**einrichtung gemäß Anspruch 11 gelöst. Vorteilhafte Ausführungsformen und Weiterbildungen sind in den jeweiligen Unteransprüchen umschrieben.

Das erfindungsgemäße Verfahren betrifft die Kommunikation zwischen einer ersten und wenigstens einer zweiten Kommunikationseinrichtung, bei der ein Kommunikationsprotokoll eingesetzt wird, das in ein Signalisierungsprotokoll und ein Medientransportprotokoll aufgeteilt ist, wobei das Signalisierungsprotokoll der Signalisierung von Kommunikationsanfragen dient und die Übertragung der Nutzdaten unter Verwendung des Medientransportprotokolls erfolgt. Das Verfahren umfasst das Übertragen einer ersten Signalisierungsnachricht zur Signalisierung einer Kommunikationsanfrage von der ersten zu der zweiten Kommunikationseinrichtung und das Übertragen einer zweiten Signalisierungsnachricht zur Bestätigung der empfangenen Kommunikationsanfrage von der zweiten zu der ersten Kommunikationseinrichtung, wobei die erste und zweite Signalisierungsnachricht unter Verwendung eines ersten Übertragungsprotokolls übertragen werden. Ferner umfasst das Verfahren das Übertragen zumindest einiger Signalisierungsdaten, welche in der ersten und/oder der zweiten Signalisierungsnachricht enthalten sind, von der zweiten zu der ersten und/oder von der ersten zu der zweiten Kommunikationseinrichtung unter Verwendung eines zweiten Übertragungsprotokolls.

Das erste Übertragungsprotokoll ist das signalisierungsprotokoll, das zweite Übertragungsprotokoll ist beispielsweise das zur Datenübertragung eingesetzte Medientransportprotokoll. Im Falle einer verschlüsselten Datenübertragung über das Medientransportprotokoll wird als zweites Übertragungsprotokoll besonders vorteilhaft ein dem Medientransportprotokoll zugeordnetes Schlüsselmanagementprotokoll eingesetzt.

Das Verfahren kann besonders vorteilhaft bei SIP-basiertem VoIP eingesetzt werden, ist jedoch aber nicht auf diesen Anwendungsbereich beschrankt. Vielmehr lässt sich das Verfahren prinzipiell in jeder Kommunikationsanwendung einsetzen, welche die Aufteilung der Kommunikation in ein Signalisierungsprotokoll und ein separates Medientransportprotokoll vorsieht. Bei einer VoIP-Kommunikation, bei der die Datenübertragung die Übertragung von VoIP-Daten umfasst, wird vorzugsweise als erstes Übertragungsprotokoll SIP und als zweites Übertragungsprotokoll RTP oder insbesondere ein beispielsweise in SRTP (Secure Real-Time Transport Protocol) definiertes Schlüsselmanagementprotokoll verwendet.

Selbstverständlich kann auch ein beliebiges anderes, geeignetes Schlüsselmanagementprotokoll als zweites Übertragungsprotokoll eingesetzt werden. Anforderungen und Vorschläge für Schlüsselmanagementprotokolle im Falle von SIP-basierten VoIP werden beispielsweise in "Evaluation of SRTP Keying with SIP" von F. Audet und D. Wing (IETF Internet Draft, Januar 2007) und in "Media Security Requirements" von D. Wing, S. Fries und H. Tschofenig (IETF Internet Draft, April 2007) beschrieben.

Beim Beispiel des Medientransportprotokolls RTP ist eine bevorzugte Variante das in IETF RFC 3711 beschriebene Sicherheitsprotokoll SRTP. Aber auch andere Sicherungsprotokolle wie das in IETF RFC 4347 beschriebene DTLS oder das in IETF RFC 4301 und IETF RFC 4303 beschriebene IPsec/ESP sind alternativ einsetzbar. Die einzelnen Varianten benötigen entweder ein separates (SRTP und IPsec/ESP) oder haben ein eigenes Schlüsselmanagementprotokoll (DTLS), um zwischen den Teilnehmern A und B Schlüsselmaterial Ende-zu-Ende auf autorisierte weise zu etablieren.

Das Übertragen der ersten und/oder zweiten Signalisierungsnachricht erfolgt typischerweise über wenigstens eine Vermittlungseinrichtung, wobei durch die Vermittlungseinrichtung die in der jeweiligen Signalisierungsnachricht enthaltenen Signalisierungsdaten ausgewertet und zumindest teilweise geändert werden.

Die mittels des zweiten Übertragungsprotokolls übertragenen Signalisierungsdaten umfassen vorzugsweise eine Identifikation der zweiten und/oder der ersten Kommunikationseinrichtung und/oder Parameter zur Steuerung der Datenübertragung.

Somit kann durch das Verfahren beispielsweise bei einer auf VoIP basierenden Kommunikation zwischen einem Teilnehmer A und einem Teilnehmer B, die vom Teilnehmer A initiiert wird, besonders vorteilhaft die tatsächliche Identität des Teilnehmers B zum Teilnehmer A unter Verwendung des zweiten Übertragungsprotokolls übertragen werden, ohne dass eine Modifizierung durch eine Vermittlungsstelle erfolgt. Durch das Verfahren wird somit das oben beschriebene Problem gelöst, welches zum Beispiel im Zusammenhang mit einer auf PKI basierenden verschlüsselten Datenübertragung auftreten kann, wenn der Teilnehmer A nicht die Information über die tatsächliche Identität des Teilnehmers B besitzt.

Da jedoch auch bei der Übertragung der Signalisierungsdaten mittels des zweiten Ubertragungsprotokolls die Gefahr von Angriffen durch Dritte besteht, werden die mittels des zweiten Übertragungsprotokolls übertragenen signalisierungsdaten vorzugsweise integritätsgeschützt übertragen. Zu diesem zweck kann beispielsweise eine digitale Signatur eingesetzt werden. Bei Einsatz einer PKI beispielsweise werden die zu übertragenden Signalisierungsdaten mit einem privaten Schlüssel des sendenden Teilnehmers signiert und dadurch dem empfangenden Teilnehmer ermöglicht, mit Hilfe des zugeordneten öffentlichen Schlüssels des sendenden Teilnehmers zu prüfen, ob die übertragenen Daten während der Übertragung manipuliert wurden.

Zur Gewährleistung der Kommunikationssicherheit erfolgt die Datenübertragung, bei VoIP also beispielsweise die Übertragung von digitalen Sprachdaten, verschlüsselt, wobei zur Verschlüsselung der übertragenen Nutzdaten ein mittels eines Schlüsselmanagementprotokolls generierter erster Kommunikationsschlüssel eingesetzt wird.

Der erste Kommunikationsschlüssel wird in Abhängigkeit der mittels des zweiten Übertragungsprotokolls übertragenen Signalisierungsdaten generiert. Dadurch wird eine Bindung zwischen Signalisierungsprotokoll und Medientransportprotokoll erreicht. Dies ist beispielsweise besonders vorteilhaft, wenn eine Signalisierung an mehrere Teilnehmer erfolgt. Durch diese Aufspaltung der Signalisierung, die auch als Forking bezeichnet wird, werden mehrere Signalisierungsinstanzen generiert. Durch Generieren des ersten Kommunikationsschlüssels in Abhängigkeit der mittels des zweiten Übertragungsprotokolls übertragenen Signalisierungsdaten, wird erreicht, dass für jede Signalisierungsinstanz, d.h. für jeden Ziel-Teilnehmer, ein unterschiedlicher erster Kommunikationsschlüssel generiert wird, wodurch die Sicherheit zusätzlich erhöht wird. Vorteilhaft kann ferner in Abhängigkeit der mittels des zweiten Übertragungsprotokolls übertragenen Signalisierungsdaten ein zweiter, nur innerhalb des Schlüsselmanagementprotokolls, und gegebenenfalls nur temporär, verwendeter Kommunikationsschlüssel generiert werden. Die Generierung des ersten und/oder des zweiten Kommunikationsschlüssels kann beispielsweise gemäß einem der Standards IETF RFC 3830 oder IETF RFC 4306 erfolgen.

Im Rahmen der Erfindung liegt auch eine zur Durchführung des beschriebenen Verfahrens ausgebildete Kommunikationseinrichtung, beispielsweise ein Telekommunikationsendgerät wie ein Telefon, welches zur Übertragung von VoIP ausgebildet ist. Eine erfindungsgemäße Kommunikationseinrichtung ist insbesondere zur Kommunikation unter Verwendung eines Kommunikationsprotokolls ausgebildet, welches in ein Signalisierungsprotokoll und ein Medientransportprotokoll aufgeteilt ist. Insbesondere ist die Kommunikationseinrichtung dazu ausgebildet, einige in einer über das Signalisierungsprotokoll gesendeten oder empfangenen Signalisierungsnachricht enthaltenen Signalisierungsdaten mittels eines von dem Signalisierungsprotokoll separaten Übertragungsprotokoll zu übertragen, wobei das separate Übertragungsprotokoll vorzugsweise ein für eine sichere Datenübertragung eingesetztes Schlüsselmanagementprotokoll ist.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

### Es zeigen:

- Fig.1: eine schematische Darstellung eines aus dem Stand der Technik bekannten Datenübertragungssystems, bei welchem ein Kommunikationsprotokoll Verwendung findet, das in ein Signalisierungsprotokoll und ein Medientransportprotokoll aufgeteilt ist,
- Fig.2: eine schematische Darstellung eines Datenübertragungssystems, welches zur Durchführung einer bevorzugten Ausführungsform des erfindungsgemäßen Verfahrens ausgebildet ist,
- Fig. 3: eine schematische Darstellung des in Fig. 2 dargestellten Datenübertragungssystems, bei dem in einer Vermittlungsstelle ein Austausch der Empfänger-Identität erfolgt, und
- Fig. 4: eine schematische Darstellung des in Fig. 2 dargestellten Datenübertragungssystems, bei dem in einer Vermittlungsstelle eine Aufspaltung der Signalisierung erfolgt.

Die Erfindung ermöglicht somit vorteilhaft eine praktikable, effiziente und integritätsgeschützte Ende-zu-Ende Übermittlung von bestimmten Informationen, zum Beispiel den Identitäten der Teilnehmer A und B und/oder weiterer über das Signalisierungsprotokoll ausgetauschter Parameter.

Ist ferner im Schlüsselmanagementprotokoll zwischen den Teilnehmern A und B ein verlässlicher Verschlüsselungsschlüsssel vereinbart worden, zum Beispiel durch einen Diffie-Hellman Schlüsselaustausch, so können neben dem Integritätsschutz auch eine Ende-zu-Ende Verschlüsselung der obigen Parameter und Identitäten erfolgen.

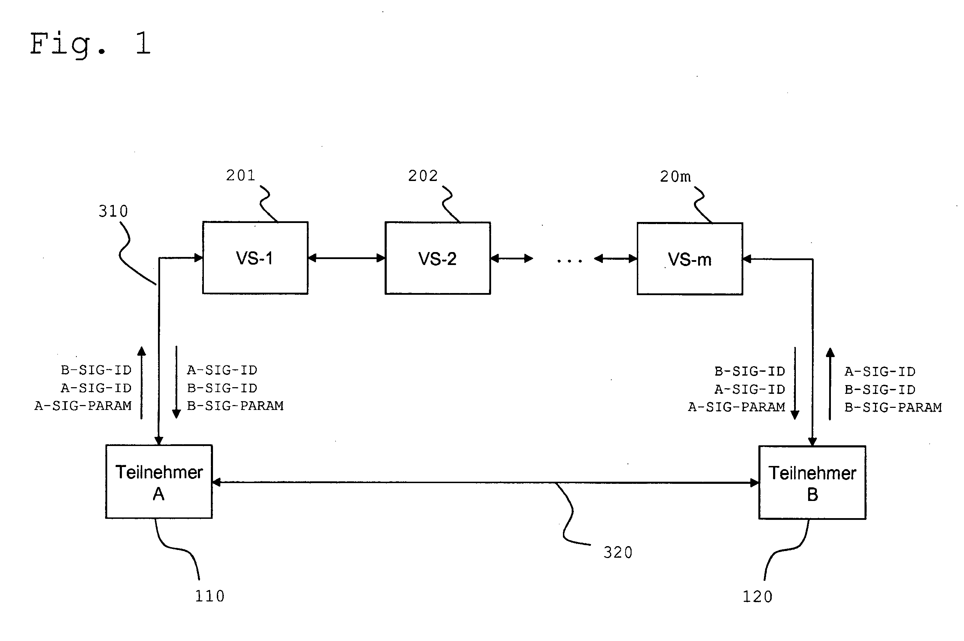

In Fig. 1 ist beispielhaft ein der Erfindung zugrundeliegendes, aus dem Stand der Technik bekanntes Datenübertragungssystem dargestellt. Im Folgenden wird beispielhaft davon ausgegangen, dass die Komponenten des Datenübertragungssystems zur Datenübertragung auf Basis von VoIP ausgebildet sind, wobei das verwendete Kommunikationsprotokoll in ein Signalisierungsprotokoll und ein Medientransportprotokoll aufgeteilt ist. Der vom Signalisierungsprotokoll verwendete Kommunikationsweg ist mit dem Bezugszeichen 310 und der vom Medientransportprotokoll verwendete Kommunikationsweg mit dem Bezugszeichen 320 bezeichnet.

Das System umfasst die Teilnehmer A und B, wobei Teilnehmer A als ein erstes Telekommunikationsendgerät 110 und Teilnehmer B als ein zweites Telekommunikationsendgerät 120 bereitgestellt sind, jeweils beispielsweise ausgebildet als VoIP-Telefone. Im Signalisierungspfad sind typischerweise Vermittlungsstellen angeordnet, deren Anzahl je nach Einsatzgebiet variieren kann. In Fig. 1 sind beispielhaft m Vermittlungsstellen 201 bis 20m dargestellt.

Die Protokollnachrichten des Signalisierungsprotokolls zwischen Teilnehmer A und Teilnehmer B durchqueren die Vermittlungsstellen 201 bis 20m, welche bei SIP-basiertem VoIP typischerweise als SIP-Proxies ausgebildet sind. Die mittels des Medientransportprotokolls übermittelten Daten werden dagegen Ende-zu-Ende zwischen den Teilnehmern A und B übertragen, ohne dass dabei Nachrichten des Medientransportprotokolls modifiziert werden. Neben den in Fig. 1 dargestellten Komponenten können sich selbstverständlich noch weitere, nicht dargestellte Komponenten, beispielsweise Netzwerkkomponenten wie Router, auf dem jeweiligen Kommunikationsweg befinden. Da diese aber keine relevanten Modifikationen an den Protokollnachrichten des Signalisierungs- oder Medientransportprotokolls durchführen, können sie bei der Beschreibung der Erfindung unberücksichtigt bleiben.

Die Identitäten der Teilnehmer A und B innerhalb des Signalisierungsprotokolls sind mit A-SIG-ID bzw. B-SIG-ID bezeichnet. Die Kennzeichnung der Protokollinstanz des Signalisierungsprotokolls wird durch die Parameter A-SIG-PARAM und B-SIG-PARAM beschrieben, wobei typischerweise, wie beispielsweise bei SIP-basiertem VoIP, A-SIG-PARAM durch den Teilnehmer A und B-SIG-PARAM durch den Teilnehmer B bei der ersten Antwort innerhalb des Signalisierungsprotokolls festgelegt werden. Somit ist eine Instanz eines Signalisierungsprotokolls eindeutig durch das Tupel (A-SIG-ID, A-SIG-PARAM, B-SIG-ID, B-SIG-PARAM) gekennzeichnet.

Wie in Fig. 1 dargestellt, werden typischerweise, wie beispielsweise bei SIP-basiertem VoIP, die Parameter A-SIG-ID, A-SIG-PARAM und B-SIG-ID in der ersten Protokollnachricht des Signalisierungsprotokolls von dem Teilnehmer A an den Teilnehmer B übertragen. Der Parameter B-SIG-PARAM wird dem Teilnehmer A in einer folgenden Protokollnachricht im Signalisierungsprotokoll durch den Teilnehmer B mitgeteilt.

Im Falle der Anwendung SIP-basiertes VoIP ergeben sich typischerweise die folgenden Entsprechungen.

A-SIG-ID entspricht der SIP-URI (URI; Uniform Resource Identifier) im Feld "From" des Headers der entsprechenden SIP-Nachricht und somit der tatsächlichen SIP-Identität des Teilnehmers A auf der Ebene des Signalisierungsprotokolls.

B-SIG-ID entspricht der SIP-URI im Feld "To" des Headers der entsprechenden SIP-Nachricht und somit der tatsächlichen SIP-Identität des Teilnehmers B auf Ebene des Signalisierungsprotokolls.

A-SIG-PARAM entspricht einem Tag im Feld "From" und im Feld "Call-Id" des Headers der entsprechenden SIP-Nachricht und kann gegebenenfalls weitere Informationen umfassen. B-SIG-PARAM entspricht einem Tag im Feld "To" des Headers der SIP-Antwort von Teilnehmer B und kann ebenfalls gegebenenfalls weitere Informationen umfassen.

Da bei der Übertragung und der Verarbeitung der mittels des Signalisierungsprotokolls übertragenen Nachrichten die Vermittlungsstellen 201 bis 20m einbezogen sind, können dort gegebenenfalls die folgenden vermittlungstechnischen Vorgänge unabhängig voneinander auftreten.

Die Identität des Empfängers kann durch eine Vermittlungsstelle in eine neue Empfängeridentität geändert werden. Die Nachrichten des Signalisierungsprotokolls können an n verschiedene Endpunkte, wie beispielsweise unterschiedliche Endgeräte, des Teilnehmers B weitergeleitet werden. Durch diese Aufspaltung der Signalisierung entstehen dann verschiedene Instanzen des Signalisierungsprotokolls.

Ferner können durch einen Angreifer die Identitäten und andere Protokollinformationen der Teilnehmer in den Signalisierungsnachrichten modifiziert werden, falls keine Sicherheitsmechanismen im Hinblick auf einen Integritätsschutz auf die Signalisierungsnachrichten zwischen den Teilnehmern und den Vermittlungsstellen angewendet werden.

Ein herkömmliches Datenübertragungssystem, wie es im Zusammenhang mit Fig. 1 beschrieben wurde, erlaubt in den obigen Fällen keine sichere Datenübertragung, da der Teilnehmer A, der die Kommunikation durch Versenden einer ersten Signalisierungsnachricht an den Teilnehmer B initiiert, keine Information über die tatsächliche Identität des Teilnehmers B besitzt.

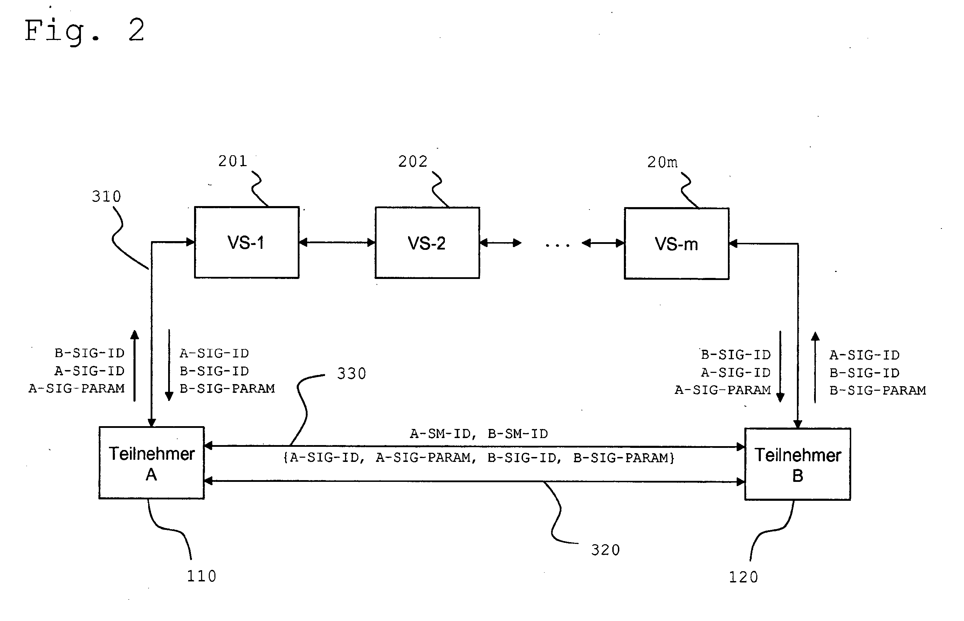

In den Figuren 2 bis 4 ist ein Datenübertragungssystem dargestellt, welches zur Durchführung einer bevorzugten Ausführungsform des erfindungsgemäßen Verfahrens ausgebildet ist. Es ist dort jeweils ein dem Medientransportprotokoll zugeordnetes Schlüsselmanagementprotokoll vorgesehen, dessen Kommunikationsweg mit dem Bezugszeichen 330 bezeichnet ist. Die Identitäten der Teilnehmer A bzw. B im Schlüsselmanagementprotokoll sind als A-SM-ID bzw. B-SM-ID bezeichnet. Mit Hilfe des Schlüsselmanagementprotokolls wird vorzugsweise ein kryptographischer Schlüssel erzeugt, der zur Verschlüsselung der mittels des Medientransportprotokolls zu übertragenden Daten eingesetzt wird.

In Fig. 2 ist der vermittlungstechnische Fall dargestellt, dass keine Aufspaltung der Signalisierung und kein Austausch der Identität des Teilnehmers B stattfindet.

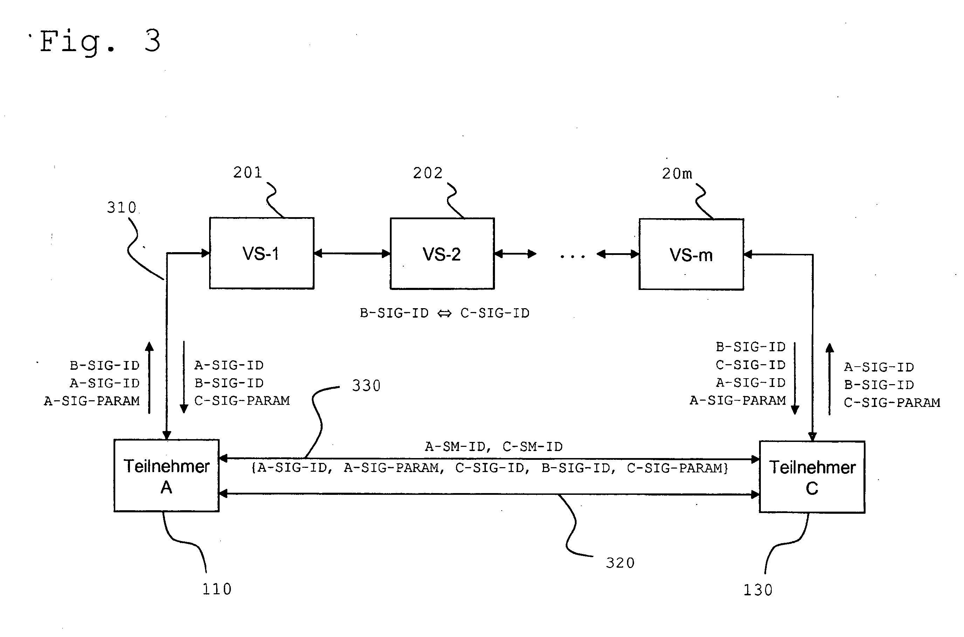

Der Fall eines Austausches der Identität des Empfängers von B-SIG-ID auf eine neue Empfängeridentität C-SIG-ID durch die Vermittlungsstelle 202 ist beispielhaft in Fig. 3 dargestellt. In diesem Fall wird die Instanz des Signalisierungsprotokolls durch das Tupel (A-SIG-ID, A-SIG-PARAM, C-SIG-ID, C-SIG-PARAM) gekennzeichnet. Die Kommunikation findet dementsprechend zwischen Teilnehmer A und dem als Endgerät 130 ausgebildeten Teilnehmer C statt. Das Endgerät 130 kann beispielsweise ebenfalls ein VoIP-Telefon sein, oder aber auch ein Telekommunikationsserver zur Aufnahme und Speicherung von Sprachnachrichten in Form einer Sprach-Mailbox, wobei der Austausch der Identität beispielsweise aufgrund einer aktivierten Rufumleitung durch die Vermittlungsstelle 202 bewirkt wird. Hierbei kann es, wie in Fig. 2 dargestellt, vorkommen, dass dem Teilnehmer A der Austausch der Identität auf C-SIG-ID im Signalisierungsprotokoll nicht mitgeteilt wird. Im Falle des Signalisierungsprotokolls SIP wird dieser Verarbeitungsschritt als URI-Rewriting bezeichnet.

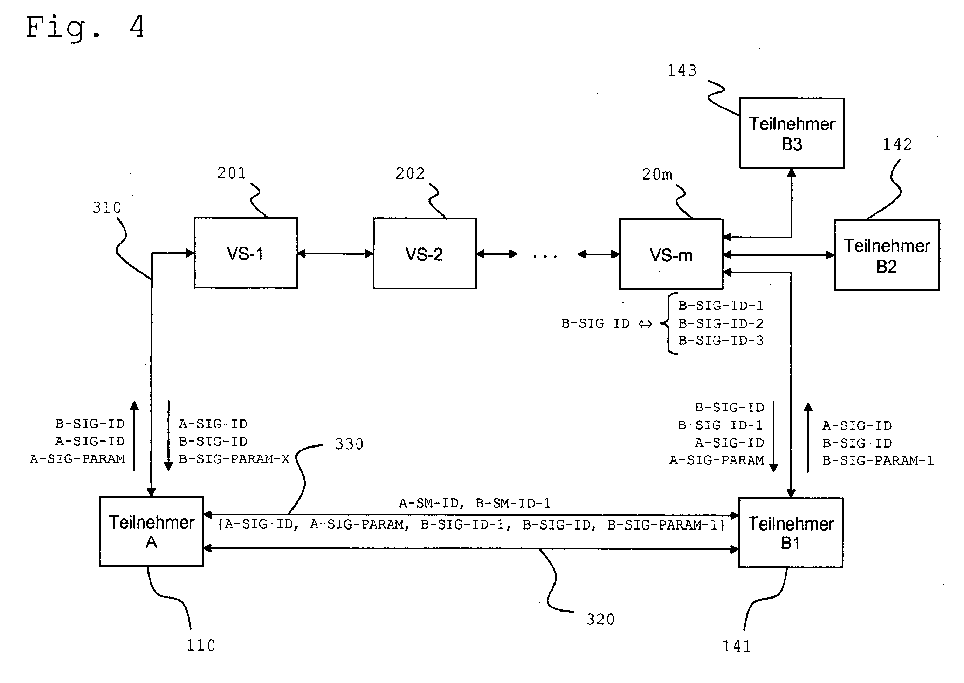

In Fig. 4 ist der Fall einer Aufspaltung der Signalisierung dargestellt, wobei die mittels des Signalisierungsprotokolls von Teilnehmer A gesendeten Nachrichten beispielhaft von der Vermittlungsstelle 20m an drei verschiedene Endpunkte, und zwar an die drei Endgeräte 141, 142 und 143 des Teilnehmers B weitergeleitet werden. In diesem Fall legt jeder Endpunkt einen eigenen Parameter B-SIG-PARAM fest, die für die drei beispielhaft dargestellten Endpunkte als B-SIG-PARAM-1, B-SIG-PARAM-2 und B-SIG-PARAM-3 bezeichnet sind. Durch diese Aufspaltung der Signalisierung entstehen drei verschiedene Instanzen des Signalisierungsprotokolls. Im Falle des Signalisierungsprotokolls SIP wird dieser Verarbeitungsschritt als Forking bezeichnet. Die Endgeräte 141, 142 und 143 können beispielsweise als VoIP-Telefone ausgebildet und in einem Sekretariat aufgestellt sein, wobei durch entsprechende Einstellungen festgelegt ist, dass ein ankommender Ruf an jedem der drei Endgeräte 141, 142 oder 143 angenommen werden kann.

In den Figuren 2 bis 4 sind jeweils die mittels über das Signalisierungsprotokoll ausgetauschten Informationen, die im Rahmen des Schlüsselmanagementprotokolls verwendeten Identitäten der jeweiligen Teilnehmer dargestellt. Der Kommunikationsweg 330 des Schlüsselmanagementprotokolls und der Kommunikationsweg 320 des Medientransportprotokolls ist in den Figuren 2 bis 4 der Übersichtlichkeit halber jeweils getrennt voneinander dargestellt. Wie bereits oben beschrieben, können jedoch auch Schlüsselmanagementprotokoll und Medientransportprotokoll in einem gemeinsamen Protokoll integriert sein.

Bei dem den Figuren 2 bis 4 zugrunde liegenden Medientransportprotokoll handelt es sich um ein sicheres Protokoll, bei welchem zu übertragende Daten auf der Basis von Schlüsselmaterial verschlüsselt werden, das mit Hilfe des Schlüsselmanagementprotokolls etabliert wurde.

Ein Kerngedanke der Erfindung sieht zur Gewährleistung einer sicheren Datenübertragung vor, die mittels des Signalisierungsprotokolls übertragenen Informationen zumindest teilweise zusätzlich mittels des Ende-zu-Ende Schlüsselmanagementprotokolls für den sicheren Medientransport zu übertragen, sowie diese Informationen vorzugsweise zum Ableiten von Schlüsselmaterial einzusetzen.

Mit der Symbolik "{...}" in den Figuren 2 bis 4 wird ausgedrückt, dass die eingeklammerten Parameter integritätsgeschützt übertragen werden. Optional ist die vertrauliche Übertragung dieser Parameter möglich. Zu diesem Zweck wird beispielsweise mittels des Schlüsselmanagementprotokolls zunächst ein kryptographischer Schlüssel für die Verschlüsselung der über das Medientransportprotokoll zu übertragenden Daten generiert und dieser auch zur verschlüsselten Übertragung der Signalisierungsparameter verwendet.

Das Verfahren ist nicht auf die Verwendung eines speziellen Schlüsselmanagementprotokolls beschränkt, sondern es kann ein beliebiges geeignetes Protokoll eingesetzt werden, wie beispielsweise gemäß SRTP, IPsec/ESP oder DTLS, wobei die Funktionalität der integritätsgeschützten Übertragung der Parameter aus dem Signalisierungsprotokoll jeweils in das entsprechende Schlüsselmanagementprotokoll integriert wird.

Besonders vorteilhaft sind bei dem beschriebenen Verfahren keine Modifikationen an den funktionalen Komponenten der Vermittlungsstellen oder am Signalisierungsprotokoll notwendig.

Vorzugsweise können bei der Ableitung des Schlüsselmaterials für den sicheren Medientransport die Signalisierungsparameter einbezogen werden. Dadurch wird eine Bindung zwischen Signalisierung und Medientransport hergestellt. Dies ist insbesondere im Spezialfall der Aufspaltung der Signalisierung (Forking) an mehrere Teilnehmer besonders vorteilhaft. Im Folgenden wird eine mögliche Vorgehensweise für die Ableitung des Schlüsselmaterials von Parametern P, welche über das Signalisierungsprotokoll übertragen wurden, beschrieben, wobei P jeweils eine Teilmenge der Parameter (A-SIG-ID, A-SIG-PARAM, B-SIG-ID, B-SIG-PARAM), (A-SIG-ID, A-SIG-PARAM, C-SIG-ID, B-SIG-ID, C-SIG-PARAM) oder (A-SIG-ID, A-SIG-PARAM, B-SIG-ID-1, B-SIG-ID, B-SIG-PARAM-1) bezeichnet.

Zunächst wird durch das Schlüsselmanagement der Schlüssel K der Länge L ohne die Einbeziehung der Parameter P ermittelt. Es wird dann mittels einer Schlüsselexpansionsfunktion F, die einen gegebenen Schlüssel K und eine Zeichenkette P auf eine beliebige Schlüssellänge L' expandiert, der neue Schlüssel K' erzeugt, wobei K' definiert ist als K' = F(K,P,L).

Einsetzbare Schlüsselableitungsfunktionen F, die den obigen Anforderungen genügen, sind beispielsweise in den Standards IETF RFC 3830, Abschnitt 4.1 oder IETF RFC 4306, Abschnitt 2.13 beschrieben. Die beschriebene Schlüsselableitung kann nicht nur für das Schlüsselmaterial für das sichere Medientransportprotokoll, sondern auch innerhalb des Schlüsselmanagementprotokolls zur Generierung von temporären, symmetrischen Schlüsseln verwendet werden.

## Patentansprüche

1. Verfahren zur Kommunikation zwischen einer ersten Kommunikationseinrichtung (110) und wenigstens einer zweiten Kommunikationseinrichtung (120, 130, 141-143), mit den Schritten
- Übertragen einer ersten Signalisierungsnachricht, zur Signalisierung einer Kommunikationsanfrage von der ersten Kommunikationseinrichtung (110) zu der zweiten Kommunikationseinrichtung (120, 130, 141-143) unter Verwendung eines ersten Übertragungsprotokolls (320),
- Übertragen einer zweiten Signalisierungsnachricht zur Bestätigung der empfangenen Kommunikationsanfrage von der zweiten Kommunikationseinrichtung (120, 130, 141-143) zu der ersten Kommunikationseinrichtung (110) unter Verwendung des ersten Übertragungsprotokolls (310), wobei zumindest einige Signalisierungsdaten, welche in der ersten und/oder der zweiten Signalisierungsnachricht enthalten sind, von der zweiten Kommunikationseinrichtung (120, 130, 141-143) zu der ersten Kommunikationseinrichtung (110) und/oder'von der ersten Kommunikationseinrichtung (110) zu der zweiten Kommunikationseinrichtung (120, 130, 141-143) unter Verwendung eines zweiten Übertragungsprotokolls (320, 330) übertragen werden, wobei die Datenübertragung verschlüsselt erfolgt, **dadurch gekennzeichnet, dass** zur Verschlüsselung der Daten ein mittels eines Schlüsselmanagementprotokolls generierter erster Kommunikationsschlüssel eingesetzt wird, und der erste Kommunikationsschlüssel in Abhängigkeit der mittels des zweiten Übertragungsprotokolls (320, 330) übertragenen Signalisierungsdaten generiert wird.

2. Verfahren nach Anspruch 1, wobei das Übertragen der ersten und/oder zweiten Signalisierungsnachricht über wenigstens eine Vermittlungseinrichtung (201 - 20m) erfolgt, wobei durch die Vermittlungseinrichtung (201 - 20m) die in der jeweiligen Signalisierungsnachricht enthaltenen Signalisierungsdaten zumindest teilweise geändert werden.

3. Verfahren nach einem der vorstehenden Ansprüche, wobei die mittels des zweiten Übertragungsprotokolls (320, 330) übertragenen Signalisierungsdaten eine Identifikation der ersten (110) und/oder zweiten Kommunikationseinrichtung (120, 130, 141-143) und/oder Parameter zur Steuerung der Datenübertragung umfassen.

4. Verfahren nach einem der vorstehenden Ansprüche, wobei die mittels des zweiten Übertragungsprotokolls (320, 330) übertragenen Signalisierungsdaten integritätsgeschützt übertragen werden.

5. Verfahren nach Anspruch 4, wobei das integritätsgeschützte Übertragen der Signalisierungsdaten mittels einer digitalen Signatur erfolgt.

6. Verfahren nach einem der vorstehenden Ansprüche, wobei das zweite Übertragungsprotokoll ein zur Datenübertragung eingesetztes Medientransportprötokoll (320) oder ein dem zur Datenübertragung eingesetzten Medientransportprotokoll zugeordnetes Schlüsselmanagementprotokoll (330) ist.

7. Verfahren nach einem der vorstehenden Ansprüche, wobei als erstes Übertragungsprotokoll SIP und als zweites Übertragungsprotokoll RTF oder ein in SRTP definiertes Schlüsselmanagementprotokoll verwendet wird.

8. Verfahren nach Anspruch 7, wobei die Datenübertragung die Übertragung von VoIP-Daten umfasst.

9. verfahren nach einem der vorstehenden Ansprüche, wobei in Abhängigkeit der mittels des zweiten Übertragungsprotokolls (320, 330) übertragenen Signalisierungsdaten ein zweiter, nur innerhalb des Schlüsselmanagementprotokolls verwendeter Kommunikationsschlüssel generiert wird.

10. Verfahren nach einem der vorstehenden Ansprüche, wobei der erste und/oder der zweite Kommunikationsschlüssel gemäß einem der Standards IETF RFC 3830 oder IETF RFC 4306 generiert wird.

11. Kommunikationseinrichtung (110, 120, 130, 141-143), ausgebildet zur Durchführung eines Verfahrens nach einem der vorstehenden Ansprüche.

## Claims

1. A method for communication between a first communications device (110) and at least one second communications device (120, 130, 141 - 143), comprising the steps of:
- transmitting a first signalling message for signalling a communication request from the first communications device (110) to the second communications device (120, 130, 141 - 143) using a first communications protocol (310),
- transmitting a second signalling message for acknowledging the received communication request from the second communications device (120, 130, 141 - 143) to the first communications device (110) using the first communications protocol (310), wherein at least some of the signalling data included in said first and/or second signalling messages are transmitted from the second communications device (120, 130, 141 - 143) to the first communications device (110) and/or from the first communications device (110) to the second communications device (120, 130, 141-143) using a second communications protocol (320, 330), wherein data transmission is encrypted, **characterized in that** for encrypting the data a first communication key is used which is generated by a key management protocol, and that the first communication key is generated as a function of the signalling data transmitted using the second communications protocol (320, 330).

2. The method according to claim 1, wherein the first and/or second signalling messages are transmitted via at least one switching means (201 - 20m), wherein the signalling data included in each of the signalling messages are at least partially altered by the switching means (201-20m).

3. The method according to any of the preceding claims, wherein the signalling data transmitted using the second communications protocol (320, 330) comprise an identification of the first (110) and/or second communications devices (120, 130, 141 - 143), and/or parameters for controlling data transmission.

4. The method according to any of the preceding claims, wherein the signalling data transmitted using the second communications protocol (320, 330) are transmitted in an integrity protected manner.

5. The method according to claim 4, wherein the integrity protected transmission of the signalling data is performed using a digital signature.

6. The method according to any of the preceding claims, wherein the second communications protocol is a media transport protocol (320) employed for data transmission, or a key management protocol (330) associated with the media transport protocol employed for data transmission.

7. The method according to any of the preceding claims, wherein SIP is used as the first communications protocol, and RTP or a key management protocol defined in SRTP is used as the second communications protocol.

8. The method according to claim 7, wherein the data transmission comprises the transmission of VoIP data.

9. The method according to any of the preceding claims, wherein as a function of the signalling data transmitted using the second communications protocol (320, 330) a second communication key is generated, which is only employed within the key management protocol.

10. The method according to any of the preceding claims, wherein the first and/or the second communication key is generated according to any of standards IETF RFC 3830 and IETF RFC 4306.

11. A communications device (110, 120, 130, 141 - 143) adapted for carrying out a method according to any of the preceding claims.

## Revendications

1. Procédé de communication entre un premier dispositif de communication (110) et au moins un deuxième dispositif de communication (120, 130, 141-143), avec les étapes :
- transmettre un premier message de signalisation pour signaliser une demande de communication du premier dispositif de communication (110) au deuxième dispositif de communication (120, 130, 141-143) en utilisant un premier protocole de transmission (310),
- transmettre un deuxième message de signalisation pour confirmer la demande de communication reçue par le deuxième dispositif de communication (120, 130, 141-143) au premier dispositif de communication (110) en utilisant le premier protocole de transmission (310), dans lequel au moins quelques données de signalisation, contenues dans le premier et/ou le deuxième message de signalisation, sont transmises du deuxième dispositif de communication (120, 130, 141-143) vers le premier dispositif de communication (110) et/ou du premier dispositif de communication (110) vers le deuxième dispositif de communication (120, 130, 141-143) en utilisant un deuxième protocole de transmission (320, 330), dans lequel la transmission des données est réalisée de façon cryptée, **caractérisée en ce qu'**une première clef de communication générée au moyen d'un protocole de gestion de clef est implantée pour le cryptage des données, et la première clef de communication est générée dépendamment des données de signalisation transmises au moyen du deuxième protocole de transmission (320, 330).

2. Procédé selon la revendication 1, dans lequel la transmission du premier et/ou deuxième message de signalisation se produit à travers au moins un dispositif de commutation (201 - 20m) dans lequel les données de signalisation contenues dans les messages de signalisation respectifs sont au moins partiellement modifiées par le dispositif de commutation (201, 20m).

3. Procédé selon l'une des revendications précédentes, dans lequel les données de signalisation transmises au moyen du deuxième protocole de transmission (320, 330) comprennent une identification du premier (110) et/ou deuxième dispositif de communication (120, 130, 141-143) et/ou des paramètres de commande de la transmission des données.

4. Procédé selon l'une des revendications précédentes, dans lequel les données de signalisation transmises au moyen du deuxième protocole de transmission (320, 330) sont transmises de sorte que leur intégrité est sécurisée.

5. Procédé selon la revendication 4, dans lequel la transmission des données de signalisation dont l'intégrité est sécurisée s'effectue au moyen d'une signature numérique.

6. Procédé selon l'une des revendications précédentes, dans lequel le deuxième protocole de transmission est un protocole de transport de média (320) utilisé pour la transmission de données ou un protocole de gestion de clef (330) affecté au protocole de transport de média utilisé pour la transmission de données.

7. Procédé selon l'une des revendications précédentes, dans lequel SIP est utilisé comme premier protocole de transmission et RTP ou un protocole de gestion de clef défini dans SRTP comme deuxième protocole de transmission.

8. Procédé selon la revendication 7, dans lequel la transmission des données comprend la transmission de données VOIP.

9. Procédé selon l'une des revendications précédentes, dans lequel une deuxième clef de communication est générée, seulement dans le protocole de gestion de clef dépendamment des données de signalisation transmises au moyen du deuxième protocole de transmission (320, 330).

10. Procédé selon l'une des revendications précédentes, dans lequel la première et/ou la deuxième clef de communication est générée selon le standard IETF RFC 3830 ou IETF RFC 4306.

11. Dispositif de communication (110, 120, 130, 141-143), formé pour la réalisation d'un procédé selon l'une des revendications précédentes.
